# DEMANDE DE BREVET EUROPEEN

(11) **EP 0 632 085 A1**
(43) Date de publication de la demande: **04.01.1995**
(21) Numéro de dépôt: 94420184.7
(22) Date de dépôt: 29.06.1994
(51) Int. Cl.: C08G 77/442, C08L 83/07, C08J 3/24, D21H 19/32, D21H 27/00

(54) **Nouveaux polymères silicones à fonctions oléfiniques, leur procédé de préparation et compositions durcissables comprenant lesdits polymères**

(30) Priorité: 02.07.1993 FR 9308115
(71) Demandeur: RHONE-POULENC CHIMIE, 92408 Courbevoie Cédex (FR)
(72) Inventeur: Frances, Jean-Marc, F-69330 Meyzieu (FR); Soldat, André, F-69008 Lyon (FR)
(74) Mandataire: Trolliet, Maurice

(57) **Abrégé**

Polyorganosiloxanes mixtes contenant des motifs semblables ou différents de formule (I)

Rₐ Y_{b} X_{c} Si O_{(4-a-b-c)/2}

dans laquelle :
- R est un groupe alkyle, vinyle, aryle ou aralkyle, au moins 80% desdits radicaux R étant un groupe méthyle ;
- X est H ou une fonction polaire réactive exempte des hétéroéléments azote et soufre
- Y est un reste alcényle ou alcényloxy au moins en C₄ présentant au moins une insaturation éthylénique en extrêmité de chaîne et/ou dans la chaîne ;
- a, b et c sont égaux à 0, 1, 2, ou 3; - a+b+c = 0, 1, 2, ou 3 ;

le taux de motifs SiO_{4/2} étant inférieur à 30% en mole.
Ils sont obtenus par réactions d'addition simultanées ou successives ou par réactions de déshydrogénocondensation et d'addition simultanées ou par réactions de déshydrogénocondensation puis d'addition successives, ce à partir des organohydrogénopolysiloxanes correspondants exempts des fonctions X et restes Y, du ou des alcène(s) dont dérivent le ou les reste(s) alcényle(s) ou alcényloxy Y et du ou des composé(s) organique(s) éthyléniquement insaturé(s) ou hydroxylé(s) dont dérive(nt) la ou les fonction(s) X.
Ils peuvent être utilisés pour la réalisation de compositions durcissables anti-adhérentes, pour papier notamment.

## Description

La présente invention a pour objet de nouveaux polymères silicones mixtes comportant des fonctions oléfiniques et des fonctions polaires réactives, un procédé de préparation desdits polymères, ainsi que des compositions durcissables antiadhérentes comprenant lesdits polymères.

Des polyorganosiloxanes porteurs de groupements alcényles ou alcényloxy, destinés à être utilisés dans l'application anti-adhérence papier, ont été décrits dans les demandes ou brevets US-A-4,347,346, EP-A-219 720 ; EP-A-454 130 et EP-A-523 660.
Des polyorganosiloxanes mixtes porteurs de groupements vinyles et époxy, comme agents d'adhérence de compositions silicones vulcanisables, ont été décrits dans la demande EP-A-336 854.
La demanderesse a trouvé de nouveaux polyorganosiloxanes mixtes à fonctions oléfiniques, susceptibles d'être utilisés notamment dans le domaine de l'antiadhérence papier, comme polymère de base ou comme modulateur d'adhérence, ou d'une manière plus générale pour l'obtention de compositions élastomères silicones.
Les compositions durcissables comprenant lesdits polyorganosiloxanes mixtes à fonctions oléfiniques présentent l'avantage de réticuler très vite à une température voisine de la température ambiante et de posséder un caractère antiadhérent aisément modulable.

Les polyorganosiloxanes mixtes faisant l'objet de l'invention, sont caractérisés en ce qu'ils contiennent
. (a) des motifs semblables ou différents de formule (I):

   Rₐ Y_{b} X_{c} Si O_{(4-a-b-c)/2} (I)

   formule dans laquelle:
   - les symboles R sont semblables ou différents et représentent un groupe alkyle en C₁-C₁₈, un groupe vinyle, un groupe aryle ou aralkyle en C₆-C₁₂, éventuellement substitué par des atomes d'halogène (fluor notamment), au moins 80% molaire desdits radicaux R représentant un groupe méthyle ;
   - les symboles X sont semblables ou différents et représentent un atome d'hydrogène ou une fonction polaire réactive exempte des hétéroéléments azote et soufre, fonction polaire réactive liée au silicium par une liaison Si-C ou Si-O-C ;
   - les symboles Y sont semblables ou différents et représentent un reste alcényle ou alcényloxy linéaire ou ramifié, au moins en C₄, de préférence en C₄-C₁₂, lié au silicium par une liaison Si-C, reste alcényle ou alcényloxy présentant au moins une insaturation éthylénique en extrémité de chaîne et/ou dans la chaîne ;
   - a, b et c sont égaux à 0,1,2, ou 3;
   - a+b+c = 0,1,2 ou 3 ;
   le taux de motifs SiO_{4/2} étant inférieur à 30% en mole ;
. (b) éventuellement des motifs de formule (II)

   Y' [Si Rₐ X_{c} O_{(4-a-c-1)/2}]ₙ (II)

   formule dans laquelle
   - Y' est un reste polyvalent dérivant de l'hydrosilylation d'au moins une double liaison éthylénique du reste Y ;
   - n est égal à la valence du reste Y'
      le nombre de motifs de formule (II) par molécule étant inférieur à 1 lorsque X représente un groupe alcoxyfonctionnel en C₁-C₄, avec Y représentant un reste alcényle ;
      - (c) éventuellement et de préférence moins de 20% molaire de motifs de formule (III)

      Rₐ Y''_{b} X_{c} Si O_{(4a-b-c)/2} (III)

      formule dans laquelle Y'' représente un reste monovalent isomère du reste Y ;
      le nombre de motifs de formule (I) dans lesquels l'atome de silicium porte une fonction X et/ou un reste Y et de motifs de formule (II) dans lesquels l'atome de silicium porte une fonction X , est tel que lesdits polyorganosiloxane contiennent
   - au moins 0,1 % molaire, de préférence de 0,5 à 5% molaire, de fonctions X
   - et au moins 0,1 % molaire, de préférence de 1,5 à 10% molaire, de restes Y.

Parmi les radicaux R on peut citer les groupes méthyle, éthyle, octyle, trifluoropropyle, vinyle, phényle ...

On entend par "fonction polaire réactive" toute fonction polaire susceptible de réagir soit chimiquement par hydrolyse, estérification, condensation, polycondensation, addition, polyaddition ..., soit par interaction dipolaire.

Comme exemple de fonction réactive X, on peut citer :
. la fonction hydrogéno ;
   ainsi que des groupes pouvant contenir de 1 à 20 atomes de carbone du type
. hydroxyfonctionnels tels que 3-hydroxypropyl, 3-(2hydroxyéthoxy)propyl ... ;
. époxyfonctionnels tels que 3-glycidoxypropyl, 4-éthanediyle(1,2-époxycyclohexyl) ... ;
. alkoxyfonctionnels tels que méthoxy, éthoxy, butoxy, octyloxy ... ;
. aryloxyfonctionnels tels que phényloxy... ;
. acyloxyfonctionnels tels que acétoxy ... ;
. alcénylcarbonyloxyfonctionnels tels que tels que acrylyloxy, méthacrylyloxy ... ;
. trialcoxysilylfonctionnels tels que -CH₂-CH₂-Si-(OC₂H₅)₃ ...

Parmi les restes Y, on peut citer les groupes 3-butényle, 5-hexényle, 9-décényle, 10-undécényle, 5,9-décadiényle, 6,11 -dodecadiényle, allyloxypropyle ...

D'une manière préférentielle la fonction X et les restes Y, Y' ou Y'' ne sont pas portés par le même atome de silicium.

Lesdits polyorganosiloxanes mixtes, faisant l'objet de l'invention peuvent être des polymères linéaires pouvant éventuellement présenter jusqu'à 50% en poids de ramifications (motifs autres que des motifs "D"), des polymères cycliques ou des polymères tridimensionnels (résines).

Ceux-ci peuvent être obtenus à partir de chlorosilanes ou d'alcoxysilanes portant la fonction X et de chlorosilanes ou d'alcoxysilanes portant le reste Y, par cohydrolyse, polycondensation et polymérisation des produits d'hydrolyse en présence de diorganosiloxanes cycliques ou redistribution en présence de polydiorganosiloxanes de haut poids moléculaire.

D'une manière préférentielle les polyorganosiloxanes mixtes de l'invention peuvent être obtenus à partir :
. des organohydrogénopolysiloxanes (H) correspondants exempts des fonctions X et restes Y,
. du ou des alcènes (Ψ) présentant au moins deux insaturations oléfiniques, dont dérivent le ou les reste(s) alcényle(s) ou alcényloxy Y
. et du ou des composé(s) organique(s) éthyléniquement insaturé(s) ou hydroxylé(s) (Ξ) dont dérive(nt) la ou les fonctions X (non hydrogéno).

Ainsi les polyorganosiloxanes mixtes de l'incention à fonction X non hydrogéno, peuvent être obtenus par réactions d'addition (hydrosilylation) simultanées ou successives ou par réactions de déshydrogénocondensation et d'addition (hydrosilylation) simultanées ou par réactions de déshydrogénocondensation puis d'addition (hydrosilylation) successives, ce à partir des organohydrogénopolysiloxanes (H) correspondants exempts des fonctions X et restes Y, du ou des alcène(s) (Ψ) présentant au moins deux insaturations oléfiniques, dont dérivent le ou les reste(s) alcényle(s) ou alcényloxy Y et du ou des composé(s) organique(s) éthyléniquement insaturé(s) ou hydroxylé(s) (Ξ) dont dérive(nt) la ou les fonction(s) X ; lorsqu'un taux de motifs de formule (II) par molécule inférieur à 1 est désiré, il est préférable que le ou les composé(s) organique(s) éthyléniquement insaturé(s) ou hydroxylé(s) (Ξ) réagissent préalablement à (I') ou aux alcène(s) (Ψ) sur les fonctions SiH de l'organohydrogénopolysiloxane (H) mis en oeuvre.

Ces réactions d'hydrosilylation et de déshydrogénocondensation peuvent être réalisées à une température de l'ordre de 15 à 200 °C, de préférence de l'ordre de 20 à 100 °C, en présence d'un catalyseur à base d'un métal du groupe du platine ; on peut citer en particulier les dérivés et complexe du platine décrits dans US-A-3,715,334, US-A-3,775,452, US-A-3,814,730, US-A-3,159,601, US-A-3,159,662.

Les quantités de catalyseur mises en oeuvre sont de l'ordre de 1 à 300 parties par million, exprimées en métal par rapport au milieu réactionnel.

Dans la définition de la "mole de (Ψ)", on considèrera comme entité élémentaire l'insaturation oléfinique susceptible de réagir avec (H) par hydrosilylation.
De même dans la définition de la "mole de (Ξ)", on considèrera comme entité élémentaire l'insaturation oléfinique ou la fonction OH susceptible de réagir avec (H) par hydrosilylation ou déshydrogénocondensation.

Les quantités de réactifs pouvant être mises en oeuvre correspondent généralement à un rapport molaire [(Ξ) + (Ψ)] + SiH [de (H)] soit de l'ordre de 0,5 à 30, de préférence de l'ordre de 2,5 à 10 ; lorsqu'un taux de motifs de formule (II) par molécule inférieur à 1 est désiré, il est préférable que le rapport molaire (Ψ) réactif / SiH [de (H)] non réagi avec (Ξ) soit supérieur à 5 et tout pariculièrement supérieur à 7.

Les polyorganosiloxanes mixtes à fonctions X hydrogéno peuvent être obtenus par réaction d'hydrosilylation partielle à partir du ou des alcène(s) (Ψ) et des organohydrogénopolysiloxanes correspondants (H) exempts desdits restes Y, le rapport molaire SiH [de (H)] / (Ψ) pouvant être de l'ordre de 0,01 à moins de 8, de préférence de l'ordre de 0,1 à 4 ; ladite opération d'hydrosilylation peut être réalisée en présence d'un catalyseur à base d'un métal du groupe du platine supporté tel que décrit dans EP-A-151 991, ledit catalyseur étant éliminé du milieu réactionnel lorsque le taux de conversion désiré des groupements hydrogénosilyles est atteint.

Lorsqu'il s'agit de polymères linéaires, ceux-ci sont essentiellement constitués de motifs "D" R₂SiO_{2/2}, RXSiO_{2/2}, RYSiO_{2/2} et "M" R₃SiO_{1/2} ou R₂YSiO₁/₂, R2XSiO_{1/2} ; les motifs "M" terminaux bloqueurs peuvent être des groupes trialkylsiloxy, dialkylarylsiloxy, dialkylvinylsiloxy, dialkylalcénylsiloxy. A titre d'exemple de motifs "M" terminaux, on peut citer les groupes triméthylsiloxy, diméthylphénylsiloxy, diméthylvinylsiloxy, diméthylhexénylsiloxy, diméthyléthoxysiloxy, diméthyléthyltriéthoxysilylsiloxy ...
A titre d'exemple de motifs "D" on peut citer les groupes diméthylsiloxy, méthylphénylsiloxy, méthylvinylsiloxy, méthylbuténylsiloxy, méthylhexénylsiloxy, méthyldécénylesiloxy, méthyldécadiénylsiloxy, méthyl3-hydroxypropylsiloxy, méthyl3-glycidoxypropyl-siloxy, méthyl2(3',4'-époxycyclohexyl)éthylsiloxy, méthylbutoxysiloxy, méthylβtriméthoxysilyléthylsiloxy, méthylβtriéthoxysilyléthylsiloxy

Lesdits polyorganosiloxanes mixtes linéaires peuvent être des huiles de viscosité dynamique à 25°C de l'ordre de 1 à 100 000 mPa.s à 25 °C, généralement de l'ordre de 10 à 5 000 mPa.s à 25°C, ou des gommes présentant une masse moléculaire de l'ordre de 1 000 000.

Lorsqu'il s'agit de polyorganosiloxanes mixtes cycliques, ceux-ci sont constitués de motifs "D" R2SiO_{2/2}, RXSiO_{2/2} et RYSiO_{2/2}, qui peuvent être du type dialkylsiloxy, alkylarylsiloxy, alkylvinylsiloxy, alkylYsiloxy, alkylXsiloxy ; des exemples de tels motifs ont déjà été cités ci-dessus.
Lesdits polyorganosiloxanes mixtes cycliques présentent une viscosité de l'ordre de 1 à 5000 mPa. s

La viscosité dynamique à 25°C des polymères silicones peut être mesurée à l'aide d'un viscosimètre BROOKFIELD selon la norme AFNOR NFT 76 102 de février 1972.

Lorsqu'il s'agit de résines polyorganosiloxanes, celles-ci sont constituées d'au moins deux types de motifs siloxy différents, à savoir des motifs "M" et des motifs "Q" (SiO₂) et/ou "T" et éventuellement des motifs "D". Le rapport nombre de motifs "M" / nombre de motifs "Q" et/ou "T" est de 4/1 à 0,5/1, le rapport nombre de motifs "D" / nombre de motifs "Q" et/ou "T" est de 100/1 à 0.
Les résines présentent de préférence un rapport molaire O/Si supérieur à 0,75 ; lorsque ledit rapport est inférieur à 1 lesdites résines sont généralement liquides ; des produits plus visqueux présentent un rapport O/Si voisin de 1 ; des résines solides thermoplastiques ou à haut point de ramollissement sont obtenues lorsque ledit rapport est supérieur à 1.
Les motifs "M" sont essentiellement ceux déjà cités ci-dessus ; les motifs "T" sont essentiellement constitués par les groupes RSiO_{3/2}, XSiO_{3/2}, YSiO_{3/2}, tels que méthylsiloxy, vinylsiloxy, phénylsiloxy, buténylsiloxy, hexénylsiloxy, décénylsiloxy, décadiénylsiloxy, 3-hydroxypropylsiloxy, 3-glycidoxypropylsiloxy, 2(3',4'-époxycyclohéxylsiloxy, 3(2hydroxyéthoxy)propyl)siloxy, méthoxysiloxy, butoxysiloxy, phényloxysiloxy, acétoxysiloxy, acryloxysiloxy, β(triétoxysilyl)éthylsiloxy... ; les motifs "D" sont essentiellement ceux mentionnés ci-dessus.
Bien que les nouveaux polymères de l'invention soient essentiellement constitués des motifs siloxy ci-dessus mentionnés, il ne faut toutefois pas exclure la présence possible de traces de motifs silanols (moins de 20% en poids)

La présente invention a également pour objet les compositions durcissables anti-adhérentes comprenant les polyorganosiloxanes mixtes ci-dessus décrits.
Selon l'invention les compositions durcissables antiadhérentes renferment:
- (100-x)parties en poids d'un polydiorganosiloxane "Si alcényle"de base (A) choisi parmi
   . les polydiorganosiloxanes linéaires ou cyclique (A1) bloqués par des groupes terminaux triorganosiloxanes , lesdits radicaux organiques étant des groupes alkyle ou cycloalkyle en C₁-C₁₈, alcényle en C₂-C₂₀, de préférence en C₂-C₁₂, alcényl(C₃-C₉)oxyalkylène(C₂-C₄), phényle, au moins 80% molaire desdits radicaux étant un groupe méthyle, au moins 0,1% molaire, de préférence de 0,5 à 5% molaire desdits radicaux organiques étant des groupes alcényle ou alcényloxyalkylène identiques ou différents liés directement au silicium (_{"Si} _{alcényle"}) ;
   . et/ou les polydiorganosiloxanes mixtes linéaires ou cycliques (A2) contenant les motifs de formules (I), (II) et éventuellement (III) ci-dessus, polydiorganosiloxanes mixtes essentiellement constitués de motifs "D" et "M", ledit polyorganosiloxane (A) étant éventuellement dilué dans un solvant des polymères silicones ;
- un agent de réticulation polyorganohydrogénosiloxane (B) choisi parmi
   . les polyorganohydrogénosiloxanes linéaires ou cycliques (B1) contenant de 1,6 à 0,9 % molaire d'atomes d'hydrogène liés directement au silicium ("_{SiH}") en bout(s) de chaîne et/ou dans la chaîne, les radicaux organiques identiques ou différents étant des groupes alkyle en C₁-C₁₈, phényle, au moins 80 % molaire desdits radicaux organiques étant des groupes méthyle ;
   . et/ou les résines polyorganohydrogénosiloxanes (B2) constituées de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
      ledit agent de réticulation (B) étant éventuellement dilué dans un solvant des polymères silicones ;
- éventuellement un agent inhibiteur d'hydrosilylation (C)
- une quantité efficace d'un catalyseur d'hydrosilylation (D)
- x parties en poids d'une résine mixte polyorganosiloxane (F) modulateur d'adhérence contenant des motifs de formules (I), (II) et éventuellement (III) ci-dessus, ladite résine mixte étant constituée d'au moins deux types de motifs siloxy différents, à savoir des motifs "M" et des motifs "Q" et/ou "T" et éventuellement des motifs "D", le rapport nombre de motifs "M" / nombre de motifs "Q" et/ou "T" étant de 4/1 à 0,5/1, le rapport nombre de motifs "D" / nombre de motifs "Q" et/ou "T" étant de 100/1 à 0,

la valeur de x pouvant aller de 1 à 100, de préférence de 5 à 95 et tout particulièrement de 10 à 50, lorsque ledit polydiorganosiloxane (A) est constitué par le polydiorganosiloxane (A1), ou de 0 à100, de préférence de 0 à 95 et tout pariculièrement de 0 à 50 lorsque ledit polydiorganosiloxane (A) est constitué par le polymère mixte (A2),
ladite résine modulateur (F) étant éventuellement diluée ou solubilisée dans un solvant des polymères silicones ;
la quantité d'agent de réticulation (B) étant telle que dans lesdites compositions durcissables le rapport nombre de moles de "_{SiH}" provenant notamment dudit agent de réticulation (B) et, éventuellement des solvants de polymères silicones / nombre de moles de "_{Si alcényl}" provenant notamment du polyorganosiloxane (A), éventuellement des solvants de polymères silicones et de la résine modulateur (F) lorsqu'elle est présente, soit supérieur à 1, de préférence de l'ordre de 1,1 à 1,6.

Le polydiorganosiloxane linéaire ou cyclique à fonctions "_{Si alcényle}" (A) présente une viscosité d'au moins 50 mPas., généralement de l'ordre de 150 à 1000 mPas. Les huiles (A1) vinylées sont des produits du commerce habituellement mises en oeuvre pour préparer des compositions durcissables antiadhérentes (brevet US-A- 4,623,700) ; celles à groupements alcényle plus lourds ou alcényloxyalkylène (A1) sont décrites notamment dans les brevets EP -B- 219 720 et EP-A-454 130.

A titre de solvants ou de diluants des polymères silicones, peuvent être mis en oeuvre :
- (1) des solvants hydrocarbonés classiques des résines silicone, solvants de type aromatique (xylène, toluène........), aliphatique saturé (héxane, heptane, white-spirit, tétrahydrofuranne, diethyléther.....), solvants chlorés (chlorure de méthylène, perchloroéthylène...).
   Ils sont généralement mis en oeuvre selon une quantité correspondant à 50-70 parties en poids pour 30-50 parties en poids de polymère silicone.
- (2) des solvants dits "réactifs" tels que
   . (a) des résines organopolysiloxane liquides, dont les radicaux organiques sont des groupes alkyle ou cycloalkyle en C₁-C₁₈, alcényle en C₂-C₂₀, de préférence en C₂-C₁₂, présentant un rapport nombre de motifs "M"/ nombre de motifs "Q" et/ou "T" de l'ordre de 1 à 4 et éventuellement de 1 à 5 motifs "D" pour 100 moles de résine liquide, et contenant de 0,5 à 5 % molaire de fonctions alcényle liées au silicium ("_{Si alcényle}") ou d' atomes d'hydrogène liés au silicium ("_{SiH}") ; ces résines présentent une viscosité à 25°C inférieure à 100 mPas., de préférence de l'ordre de 2 à 50 mPas..
      Ces résines liquides sont des produits connus ; elles sont notamment décrites dans le brevet US-A- 4,707,531 et la demande européenne EP -A- 389 138.
   . et/ou (b) des huiles organopolysiloxanes fluides, dont les radicaux organiques sont des groupes alkyle ou cycloalkyle en C₁-C₁₈, alcényle en C₂-C₂₀, alcényl(C₃-C₉)oxyalkylène(C₂-C₄), huiles contenant de 0,2 à 5 % molaire de fonctions alcényle ou alcényloxyalkylène liées au silicium, en bout(s) de chaîne ou dans la chaîne, lesdites huiles présentant une viscosité inférieure à 200 mPa. s.
   . et/ou (c) des hydrocarbures à insaturation(s) oléfinique(s) tels que oléfines en C₁₄-C₁₈, dibutylmaléate, décylvinyléther, dodécylvinyléther, camphène, méta-bis isopropénylbenzène...
      Les solvants dits "réactifs" sont généralement mis en oeuvre selon une quantité correspondant à 20-50 parties en poids pour 80-50 parties en poids de polymère silicone.
- (3) des émulsions aqueuses d'agents tensio-actifs non-ioniques (alcool polyvinylique, alkylphénolpolyéthoxylés, éthers oxyéthylénés d'alcools gras ...) contenant généralement de l'ordre de 1-3% en poids d'agent tensio-actif.
   Elles sont généralement mises en oeuvre à raison de 40-70 parties en poids pour 60-30 parties en poids de polymère silicone.

L'agent de réticulation à fonctions "_{Si H} " (B) présente une viscosité inférieure à 200 mPa.s., de préférence de l'ordre de 5 à 150 mPa.s. Des exemples de ces agents de réticulation sont donnés dans le brevet US - A- 4,623,700, le brevet européen EP -B- 219 720, les brevets US - A- 4,726,964 et 3,436,366.

Parmi les catalyseurs pouvant être présents on peut citer les dérivés et complexes bien connus de métaux tels que platine, rhodium, ruthénium... Des exemples de catalyseurs sont donnés dans les brevets US-A- 3,159,601 3,159,662 ; 3,220,972 ; 3,715,334 ; 3,775,452 ; 3,814,730 ; 3,296,291 3,928,629 ; français FR-A-1 313 846 ; 1 480 409. Ils sont généralement mis en en oeuvre selon une quantité de l'ordre de 5 à 500 parties en poids exprimées en métal par million de parties en poids de polymères silicones réactifs.

L'agent inhibiteur d'hydrosilylation est présent en quantité telle qu'il inhibe l'action du catalyseur à température ambiante, cette action inhibitrice cessant lors du traitement de réticulation à température élevée ; cette quantité est généralement de l'ordre de 0,01 à 1 partie en poids, de préférence de l'ordre de 0,1 à 0,25 partie en poids pour 100 parties du poids total de silicone.
Parmi les inhibiteurs, on peut citer les dialkyldicarboxylates (brevets US -A-4,256,870 ; 4,476,166) ; les dialkylacétylènedicarboxylates (brevet US -A-4,347,346) ; les alcools acétyléniques (brevets US -A- 3,989,866 ; 4,336,364 ; 3,445,420).....
A côté de la résine modulateur (F) (ou à la place de celle-ci lorsqu'est mise en oeuvre le polydiorganosiloxane (A2) comme polymère de base), peuvent être présents des modulateurs classiques tels que
- des résines modulateur organopolysiloxanes à fonctions "_{Si alcényle}", constituées d'au moins deux types de motifs siloxy différents "M", "Q" et/ou "T" et éventuellement "D", les radicaux organiques étant identiques ou différents et représentant des groupes alkyle ou cycloalkyle en C₁-C₁₈, alcényle en C₂-C₂₀, de préférence en C₂-C₁₂, alcényl(C₃-C₉)oxyalkylène(C₂-C₄), au moins 80% molaire des radicaux organiques représentant un groupe méthyle, ladite résine contenant au moins 0,1% molaire, de préférence de 0,5 à 5% molaire desdits groupes alcényle ou alcényloxyalkylène identiques ou différents liés au silicium ("_{Si alcényle}"), avec un rapport nombre de motifs "M"/ nombre de motifs "Q" et/ou "T" de 0,6-1, le nombre de motifs "D" éventuels étant de 0,5-10 pour 100 moles de résine ;
- des résines modulateur à fonction "SiH" organohydrogénopolysiloxanes constituées d'au moins deux types de motifs siloxy différents "M", "Q" et/ou "T" et éventuellement "D", les radicaux organiques étant semblables ou différents et représentant des groupes de définition semblable à celle des résines précédentes, au moins 80% molaire desdits radicaux représentant un groupe méthyle, ladite résine contenant au moins 0,5% molaire, de préférence de 0,5 à 5% molaire d'atomes d'hydrogène liés directement au silicium ("_{SiH}"), avec un rapport nombre de motifs "M" / nombre de motifs "Q" et/ou "T" de 0,6-1, le nombre de motifs "D" éventuels étant de 0,5-10 pour 100 moles de résine, lesdites résines contenant moins de 10 % molaire, de préférence moins de 0,5% molaire et tout particulièrement moins de 0,3% molaire de fonctions silanol.
   Les résines modulateur à fonctions "_{Si alcényle}" , notamment les résines vinylées, sont bien connues de l'homme de l'art ; les groupes alcényle ou alcényloxy peuvent être situés sur les motifs "M", "D" ou "T"; elles peuvent être préparées par exemple selon le procédé décrit dans le brevet US -A- 2 676 182 ou par celui décrit dans le brevet US - A 4,611,042 ; un traitement bien connu de l'homme de l'art, à l'aide d'un silazane, permet d' abaisser à moins de 0,3 % en poids, le taux de fonctions silanol restantes , ce afin d'éviter des réactions parasites de condensation ; un certain nombre de ces résines sont disponibles dans le commerce, le plus souvent à l'état de solutions, par exemple à 40-70 % dans un solvant tel que le toluène ou le xylène.

Comme exemple de résine modulateur à fonctions "Si alcényle" on peut citer :
. MD^{Vi}Q où les groupes vinyle sont inclus dans les motifs "D" ;
. MM^{Vi}Q où les groupes vinyle sont inclus dans une partie des motifs "M"
. MD^{Vi}T où les groupes vinyle sont inclus dans les motifs "D"
. MM^{Héxényl}Q où les groupes héxényle sont inclus dans une partie des motifs "M"
. MM^{Allyloxypropyl}Q où les groupes allyloxypropyle sont inclus dans une partie des motifs "M".

Les résines modulateur à fonctions "Si H" sont également bien connues ; elles sont notamment décrites dans le brevet US -A-3,772,247 ; les atomes d'hydrogène peuvent être situés dans la chaîne ou en bout(s) de chaîne ; un certain nombre de ces résines sont disponibles dans le commerce, le plus souvent à l'état de solutions, par exemple à 40-70 % dans un solvant tel que le toluène ou le xylène.
Comme exemple de résines modulateur à fonction "SiH", on peut citer:
. MD'Q où les atomes d'hydrogène liés au silicium sont inclus dans les motifs "D"
. MM'Q où les atomes d'hydrogène liés au silicium sont inclus dans une partie des motifs "M"
. MM'DQ où les atomes d'hydrogène liés au silicium sont inclus dans une partie des motifs "M"
. MDT où les atomes d'hydrogène liés au silicium sont inclus dans les motifs "T".

Lesdites compositions durcissables anti-adhérentes peuvent être obtenues par mélange de ses différents constituants ; quelques conditions d'introduction sont à respecter, à savoir introduction de l'inhibiteur d'hydrosilylation avant celle de l'agent de réticulation, avec addition du catalyseur en dernier.

Lesdites compositions durcissables sont fluides à température normale ; leur viscosité est généralement de l'ordre de 100 à 500 mPa.s à 25 °C. Elles peuvent être appliquées à l'aide de dispositifs utilisés sur les machines industrielles d'enduction du papier tels que tête d'enduction à cinq rouleaux, systèmes à lames d'air, à barre égalisatrice......sur des supports ou matériaux souples, puis durcies à la chaleur par exemple à l'aide de lampes infra-rouge, de radiations UV ou de préférence par circulation dans des fours-tunnels chauffés à 70-200 °C ; le temps de passage dans ces fours est fonction de la température ; celui-ci est généralement de l'ordre de 5 à 15 secondes à une température de l'ordre de 100°C et de l'ordre de 1,5 à 3 secondes à une température de l'ordre de 180 °C.
Lesdites compositions peuvent être déposées sur tout matériau ou substrat souple tel que papiers de types divers (supercalendré, couché...), cartons,feuilles de cellulose, feuilles en métal, films de matière plastique (polyester, polyéthylène, polypropylène...) ....
Les quantités de compositions déposées sont de l'ordre de 0,5 à 2 g par m2 de surface à traiter, ce qui correspond au dépot de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression . La matière adhésive est alors aisément détachable dudit support ou matériau.

Les exemples suivants sont donnés à titre indicatif et ne peuvent être considérés comme une limite du domaine et de l'esprit de l'invention.

### Exemple 1

Dans un ballon tricol de 2 litres muni d'un système d'agitation central on introduit 77g. (0,67 mole) d'allylglycidyléther puis 191g. (2,33 moles) d'hexadiène 1-5 et 0,116g. d'un complexe du platine à 13,6% en poids de platine ligandé par du divinyl 1,3 tétraméthyl 1,1,3,3, disiloxane, tel que décrit dans la demande de brevet US 3 715 334.
On coule alors à 20°C dans le milieu réactionnel, à raison de 16,7 cm³/minute, 1000g. d'un fluide polyméthylhydrogénodiméthylsiloxane dont les caractéristiques sont les suivantes :
. Mn= 8550
. .68,1meq H / 100g.
. structure moyenne

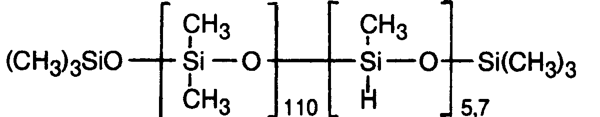

Après avoir coulé 200 cm³ d'huile, on plonge le réacteur dans un bain d'huile préalablement chauffé à 88°C. La température de la masse atteint 78°C.
Après 1 heure de réaction supplémentaire à 80°C, le taux de transformation des fonctions hydrogénosilyles est complet.
Le produit est filtré sur membrane "milliport" (porosité de 0,5 µm). La masse réactionnelle est fluide.
On prend 1157g de produit, que l'on dévolatilise pendant 5 heures à 150°C sous 2600Pa.
On récupère 961g. de produits lourds et 191,3g. de produits volatils, ce qui correspond à un bilan en masse de 99,6%.
La viscosité du produit est de 478 mPa s.
Un dosage d'iode permet de quantifier le taux de fonctions insaturées (désignées ci-après par "Vi") de l'huile obtenue ; celui-ci est de 51,7 meq"Vi"/100g.
L'analyse des produits volatils par chromatographie en phase vapeur revèle
. un taux d'hexadiène et ses isomères de 69% en poids
. un taux d'allylglycidyléther et ses isomères de 25,5% en poids
. un taux de siloxanes cycliques de 5,5% en poids.

Il a donc été fixé :
. 42g. d'hexadiène soit 53,3 meq"Vi"/100g. (calculé)
. 21g. d'allylglycidyléther soit 19,2 meqEpoxy/100g. (calculé)

Le taux de motifs de formule (II) est d'environ 0,15 fonction par molécule.

### Exemple 2

Dans un ballon tricol de 2 litres muni d'un système d'agitation central on introduit 64,7g. (0,34 mole) de vinyltriéthoxysilane puis 195,8g. (2,39 moles) d'hexadiène 1-5 et 0,116g. d'un complexe du platine à 13,6% en poids de platine ligandé par du divinyl 1,3 tétraméthyl 1,1,3,3, disiloxane, tel que décrit dans la demande de brevet US 3 715 334.
On coule alors à 25°C, 1000g. du fluide polyméthylhydrogénodiméthylsiloxane de l'exemple 1 dans le milieu réactionnel . Après avoir coulé 200 cm³ d'huile, on plonge le réacteur dans un bain d'huile pour atteindre 80°C en fin de coulée. La coulée dure 68 minutes.
On laisse réagir pendant 1 heure ; le taux de transformation des fonctions hydrogénosilyles est de 97%.
Après 30 minutes de réaction supplémentaire à 80°C, le taux de transformation des fonctions hydrogénosilyles est complet.
On prend 1143,5g. de produit recupéré après filtration, produit que l'on dévolatilise pendant 5 heures à 150°C sous 3500Pa.
On récupère 953g. de produits lourds et 170,75g. de produits volatils.
La viscosité du produit est de 370 mPa s à 22°C.
Un dosage d'iode permet de quantifier le taux de fonctions insaturées de l'huile obtenue ; celui-ci est de 49,8 meq"Vi"/100g.
L'analyse des produits volatils par chromatographie en phase vapeur revèle
. un taux d'hexadiène et ses isomères de 80,5% en poids
. un taux vinyltriéthoxysilane et ses isomères de 14% en poids
. un taux de siloxanes cycliques de 5,5% en poids.

Il a donc été fixé :
. 40,4g. d'hexadiène soit 51,7 meq"Vi"/100g. (calculé)
. 34,8g. de vinyltriéthoxysilane soit 19,2 meq/100g. (calculé)

Le taux de motifs de formule (II) est d'environ 0,16 par molécule.

### Exemple 3

Dans un ballon tricol de 2 litres muni d'un système d'agitation central on introduit 313g. (6,8 moles) d'éthanol puis 195,8g. (2,39 moles) d'hexadiène 1-5 et 0,139g. d'un complexe du platine à 13,6% en poids de platine ligandé par du divinyl 1,3 tétraméthyl 1,1,3,3, disiloxane, tel que décrit dans la demande de brevet US 3 715 334.
On coule alors à 20°C 1000g. du fluide polyméthylhydrogénodiméthylsiloxane de l'exemple 1, dans le milieu réactionnel à raison de 16,7 cm³/minute. Après avoir coulé 200 cm³ d'huile, on plonge le réacteur dans un bain d'huile préalablement chauffé de manière à atteindre 68°C dans la masse en fin de coulée.
On laisse réagir pendant 1 heure ; le taux de transformation des fonctions hydrogénosilyles est de 99%.
On prend 1490g. de produit récupéré après filtration, produit que l'on dévolatilise pendant 5 heures à 150°C sous 3500Pa.
On récupère 1027g. de produits lourds et 450g. de produits volatils.
La viscosité du produit est de 460 mPa s. à 21°C.
Un dosage d'iode permet de quantifier le taux de fonctions insaturées de l'huile obtenue ; celui-ci est de 50,6 meq"Vi"/100g.
L'analyse des produits volatils par chromatographie en phase vapeur revèle
. un taux d'hexadiène et ses isomères de 25,7% en poids
. un taux d'éthanol de 67% en poids
. un taux de siloxanes cycliques de 5,3% en poids.

Il a donc été fixé :
. 68,71g. d'hexadiène soit 56,23 meq"Vi"/100g. (calculé)
. 8g. d'éthanol soit 12 meq/100g. (calculé)

Le taux de motifs de formule (II) est d'environ 0,5 par molécule.

### Exemple 4

Dans un ballon tricol de 2 litres muni d'un système d'agitation central on introduit 84,4g. (0,68 mole) de vinyl-4, époxy-1,2 cyclohexane puis 196g. (2,38 moles) d'hexadiène 1-5 et 0,117g. d'un complexe du platine à 13,6% en poids de platine ligandé par du divinyl 1,3 tétraméthyl 1,1,3,3, disiloxane, tel que décrit dans la demande de brevet US 3 715 334.
On coule alors à 20°C 1000g. du fluide polyméthylhydrogénodiméthylsiloxane de l'exemple 1, dans le milieu réactionnel à raison de 16,7 cm³/minute. Après avoir coulé 200 cm³ d'huile, on plonge le réacteur dans un bain d'huile préalablement chauffé de manière à atteindre 80°C dans la masse en fin de coulée après 1 heure.
On agite pendant 1 heure et 30 minutes à 80°C ; le taux de transformation des fonctions hydrogénosilyles est de 100%.
Le produit est filtré sur membrane "milliport" (porosité de 0,5 µm). La masse réactionnelle est fluide et limpide.
On prend 1267g. de produit, que l'on dévolatilise pendant 5 heures à 150°C sous 2600Pa.
On récupère 1030,5g. de produits lourds et 232g. de produits volatils.
La viscosité du produit est de 571 mPa s. à 21°C.
Un dosage d'iode permet de quantifier le taux de fonctions insaturées de l'huile obtenue ; celui-ci est de 41,3 meq"Vi"/100g.
L'analyse des produits volatils par chromatographie en phase vapeur revèle
. un taux d'hexadiène et ses isomères de 64,4% en poids
. un taux d'epoxy-1,2 vinyl-4 cyclohexane de 29% en poids
. un taux de siloxanes cycliques de 6,6% en poids.

Il a donc été fixé :
. 44,5g. d'hexadiène soit 52 meq"Vi"/100g. (calculé)
. 16,2g d'epoxy-1,2 vinyl-4 cyclohexane soit 12,7 meq/100g. (calculé)

Le taux de motifs de formule (II) est d'environ 0,9 par molécule.

### Exemple 5

Dans un ballon tricol de 250 cc muni d'un système d'agitation central on introduit 60 mmoles d'hexadiène 1-5 et 120 mmoles d'allylglycidyléther et 0.625 mg de platine sous la forme d'un complexe du platine ligandé par du divinyl 1,3 tétraméthyl 1,1,3,3, disiloxane, tel que décrit dans la demande de brevet US 3 715 334.
On chauffe alors le mélange sous agitation à 40°C sous azote puis on introduit en 10 minutes 50 g d'une huile méthylhydrogénopolysiloxane de masse moléculaire moyenne en nombre Mn = 11500 présentant des motifs α - ω triméthylsilyle en bouts de chaine et comportant 29.7 meq d'hydrogénosilyle pour 100g. On élève la température pendant la coulée de l'huile à 85°C et on laisse réagir pendant environ 8 heures. Toutes les fonctions hydrogénosilyle sont transformées. On dévolatilise alors l'huile obtenue sous vide de 130Pa à 70°c et on obtient une huile à double fonctionnalité dont le taux de fonctions insaturées, dosé par iodométrie est trouvé égal à 17.2 meq pour 100 g de produit et le taux de fonctions époxy, dosé par potentiométrie est de 35 meq pour 100 g de produit. La viscosité de l'huile obtenue est de 1070 mPa..s.
Le taux de motifs de formule (II) est de 2 par mole.On n'observe que des traces de motifs de formule (III).

### Exemple 6

On répète l'opération décrite à l'exemple 1 en mettant en oeuvre 48 mmoles d'allylglycidyléther et 95 mmoles d'hexadiène, pendant 3 heures à 86 °C.
On obtient une huile dont la viscosité dynamique à 25°C est de 2450 mPa.s, et contenant 27,5 meq de fonctions insaturées et 16 meq de fonctions époxy pour 100g de produit.
Le taux de motifs de formule (II) est d'environ 2,4 par mole ; celui de motifs de formule (III) est d'environ 3% molaire.

### Exemple 7

Dans un réacteur tricol de 250 ml on introduit 7,223 g d'hexadiène (soit 88 mmoles) et 1,59 g de vinyltriéthoxysilane (soit 8,36 mmoles). On rajoute alors 1mg de platine sous la forme d'une solution à 13,6 % de Pt d'un complexe du platine ligandé par du divinyl 1,3 tétraméthyl 1,1,3,3 disiloxane tel que décrit dans la demande de brevet US 3 715 334.
On chauffe alors le mélange sous agitation à 40°C sous azote puis on introduit en 50mn, 50g. d'un polydiméthyméthyllhydrogénosiloxane présentant des motifs α - ω triméthylsilyle en bouts de chaîne et comportant un taux de volatiles de 12,76 % et un taux d'hydrogène lié à un atome de silicium de 67 meq/100 g. L'huile polydiméthyméthyllhydrogénosiloxane dévolatilisée mise en oeuvre, analysée par RMN ²⁹Si, comporte les motifs suivants
- "M" : 1,3 % molaire: (triméthylsilyl)
- "D" : 94,1 % molaire: (diméthylsilyl)
- "D'" : 4,6 % molaire: (hydrogénométhylsilyl)

La chromatographie de perméation de gel révèle une masse moléculaire moyenne de 10200.
On laisse la réaction se dérouler à 40°C pendant 7 heures ; on obtient une huile exempte de fonctions SiH, qui après dévolatilisation à 70°C sous 130Pa, présente
. une viscosité dynamique à 25°C de 3 160 mPa.s.
. un taux de fonctions oléfiniques de 52 meq/100g de produit

L'analyse RMN ²⁹Si et ²H révèle la sructure 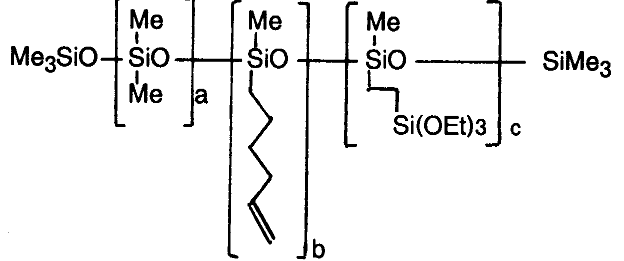
avec
a= 131
b= 5,8
c= 0,7
Le taux de motifs de formule (II) est d'environ 0,5 par mole ; des motifs de formule (III) sont présents à l'état de traces.

### Exemple 8

Dans un ballon tricol de 0,5 litre muni d'un système d'agitation central on introduit 31g. (0,68 mole) d'éthanol puis 39,2g. (0,95 moles) d'hexadiène 1-5 et 3,37mg. de platine sous la forme d'acide chloroplatinique en solution dans l'isopropanol à 7,7% en poids (soit 43,7 mg. de solution).
On coule alors 200g. du fluide polyméthylhydrogénodiméthylsiloxane de l'exemple 1, après avoir chauffé la masse réactionnelle à 50°C.
La durée de la coulée est de 68mn ; en fin de coulée la température est de 54°C.
On laisse réagir pendant 1 heure ; le taux de transformation des fonctions hydrogénosilyles est de 94,5%.
On obtient un polymère limpide, qui est dévolatilisé pour éliminer l'excès d'éthanol et d'hexadiène non réagis.
On prend 264g. de produit, que l'on dévolatilise. On récupère 201g. de produits lourds et 61,7g. de produits volatils.
La viscosité du produit est de 200 mPa s. à 21°C.
Un dosage d'iode permet de quantifier le taux de fonctions insaturées de l'huile obtenue ; celui-ci est de 19,7 meq"Vi"/100g.
L'analyse des produits volatils par chromatographie en phase vapeur avec étalon interne (undécane) revèle
. un taux d'hexadiène et ses isomères de 55,1 % en poids
. un taux d'éthanol de 43,2% en poids
. un taux de siloxanes cycliques de 0,7% en poids.

Il a donc été fixé :
. 4,4g. d'hexadiène soit 25,8 meq"Vi"/100g. (calculé)
. 3,659. d'éthanol soit 38,1 meq/100g. (calculé)

Le taux de motifs de formule (II) est d'environ 0,5 par molécule.

### Exemple 9

On répète dans un ballon tricol de 0,25 litre l'opération décrite à l'exemple 8 à partir de 3,1 g. (68,1 mmole) d'éthanol puis 19,6g. (0,47 moles) d'hexadiène 1-5 et 19,73mg. de solution platine sous la forme d'acide chloroplatinique en solution (à 7,71 % en poids de platine) dans l'isopropanol.
On coule alors 100g. du fluide polyméthylhydrogénodiméthylsiloxane de l'exemple 1, après avoir chauffé la masse réactionnelleà 50°C.
Le volume gazeux d'hydrogène dégagé est de 165 cm3 après 1heure de réaction supplémentaire et de 280 cm3 après 2 heures.
Le taux de transformation des fonctions SiH est de 98%.
On dévolatilise 120g. de polymère et on obtient 102,7g. de produits lourds et 14,6g. de produits volatils.
Le dosage d'iode des fonctions insaturées est de 44,4 meq"Vi"/100g.
Le taux de fonctions éthoxy fixé d'après le dégagement gazeux observé est de 12,5 meq EtOH/100g.
Le taux de motifs de formule (II) est d'environ 0,85 fonction par molécule.

### Exemple 10

Dans un ballon tricol de 2 litres muni d'un système d'agitation central on introduit 255g. (3,1 moles) d'hexadiène 1-5 et 0,102g. d'un complexe du platine à 13,6% en poids de platine ligandé par du divinyl 1,3 tétraméthyl 1,1,3,3, disiloxane, tel que décrit dans la demande de brevet US 3 715 334.
On coule alors lentement à 20°C dans le milieu réactionnel à l'aide d'une ampoule de coulée, 200g. d'un fluide polyméthylhydrogénodiméthylsiloxane dont les caractéristiques sont les suivantes :
. viscosité dynamique:198 mPa.s
. 98,1meq H / 100g.
. structure moyenne

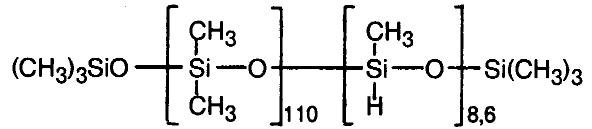

On plonge le réacteur dans un bain d'huile préalablement chauffé à 80°C, puis 695g. du même fluide polyméthylhydrogénodiméthylsiloxane sont ajoutés
Le mélange est laissé pendant 1heure sous agitation à 80°C, puis on laisse revenir lentement le mélange à température ambiante.
Le produit est dévolatilisé pendant 3 heures à 70°C sous 400Pa.
On récupère 936g. d'huile silicone fonctionnalisée.
Un dosage d'iode permet de quantifier le taux de fonctions insaturées de l'huile obtenue ; celui-ci est de 79,8 meq"Vi"/100g.
Le taux de SiH résiduel est de 0,4 meqH/100g.
Le taux de motifs de formule (II) est d'environ 1,6 fonction par molécule.
Dans un ballon tricol de 500ml équipé d'une agitation mécanique, d'un réfrigérant à eau et d'une ampoule de coulée de 50ml, on charge 50g. de l'huile silicone à fonctions hexényles ci-dessus préparée et 200g. de dichlorométhane.
Le mélange est agité et refroidi à 2°C. Un tampon d'acétate de potassium (3,9g.) est ajouté à une solution d'acide peracétique à 32% en poids dans de l'acétate d'éthyle (10,8g.).
Ce mélange est ajouté en 30 mn au milieu réactionnel par l'intermédiaire de l'ampoule de coulée.
Le bain de glace est retiré et le mélange réactionnel est laissé pendant 17h à température ambiante sous agitation.
On ajoute alors 11g. de bicarbonate de sodium et 12g. de sulfate de magnésium anhydre ; on agite vigoureusement la solution pendant 10mn. on filtre, puis on lave la solution la phase organique avec 250ml de potasse à 4% dans l'eau. La phase organique est séchée sur 21g. de sulfate de magnésium anhydre puis filtrée.
Le solvant est évaporé sous pression réduite (400Pa) à la température de 70°C.
On récupère après dévolatilisation une huile de caractéristiques suivantes :
. taux de fonctions insaturées : 49,8 meq"Vi"/100g. (dosage par iodométrie)
. taux de fonctions époxy : 28,5 meqEpoxy/100g. (dosage potentiométrique)

Le rendement de la phase d'oxydation est de 30%.

### Exemple 11

Les huiles diorganopolysiloxanes mixtes préparées aux exemples 1 à 4 sont mises en oeuvre comme suit, dans des formulations destinées à l'enduction du papier.
On introduit dans 100 g d'huile diorganopolysiloxane mixte :
- 0,15 g d'éthynylcyclohexanol comme inhibiteur,
- une huile polyméthylhydrogénosiloxane contenant environ 1% molaire de fonctions SiH et présentant une viscosité dynamique à 25°C de 100 mPa.s, en quantité suffisante pour obtenir un rapport molaire nombre de fonctions alcényles/nombre de fonctions SiH de l'ordre de 1,5.
   Après homogéneisation, on ajoute 90 parties par million, exprimées en platine, d'un complexe du platine préparé à partir d'acide chloroplatinique et de divinyl-1,3 tétraméthyl-1,1,3,3 disiloxane, comme décrit dans l'exemple 1 du brevet US - A -3,814,730.
   Après homogéneisation, le mélange est prêt à l'emploi.
   A partir de ces mélanges, ont été examinées :
- la réactivité des huiles mixtes de l'invention,
   . d'une part en suivant l'évolution de la viscosité du bain sur RAPRA VNC® (Vibrating Needle Curemeter) de RAPRA Technologie ; on mesure le temps en minutes, nécessaire pour obtenir la gélification [déterminée à l'aide d'une aiguille vibrant dans le bain à une fréquence d'environ 40 Hz ; mesure du point d'inflexion de la courbe différence de potentiel = f(temps)] dans un four chauffé à 70°C.
   . d'autre part en évaluant la qualité du réseau par mesure de la fréquence de résonnance en Hz juste après la gélification(temps T0).
- l'aptitude à l'enduction des formulations préparées, par étalement sur un support papier grâce à une machine d'enduction.
   L'appareil utilisé est une machine pilote ROTOMEC® (commercialisée par ROTOMEC) équipée d'une tête sans solvant à cinq cylindres.
   Le support utilisé est du papier glassine
- soit de type SIBILLE® 9564 commercialisé par SIBILLE
- soit de type KAEMMERER® AV 100 commercialisé par KAEMMERER
   dont le grammage est de l'ordre de 60 à 70 g/m².
   L'enduction est réalisée à vitesse variable par défilement du papier de manière à obtenir une qualité d'enduction telle que l'on n'observe plus ni de traces par frottement au doigt, ni de migration (test du ruban adhésif) sur les supports prélevés immédiatement en sortie machine.
   La quantité de revêtement déposée est mesurée par fluorescence X ; elle est de l'ordre de 1 g/m² de support.
- le comportement des papiers enduits vis-à-vis des adhésifs
   Les papiers enduits obtenus après 10 jours de vieillissement sont mis en contact avec le ruban adhésif TESA®4970 (acrylique) commercialisé par BEIERSDORF.
   Les complexes formés sont déposés dans une salle conditionnée (température de 23°C ± 2°C ; degré d'humidité de 50 % ± 5).
   La qualité des revêtements est évaluée par mesure de la force d'adhérence (ou de décollement), exprimée en cN/cm selon le test FINAT n° 10 à l'aide d'un dynamomètre INSTRON® (commercialisé par INSTRON) avec une vitesse de décollement de 0,3 m/mn
   Les résultats obtenus sont rassemblés au tableau I.
   A titre comparatif, sont également donnés les résultats obtenus en remplaçant les huiles mixtes de l'invention par les mêmes quantités des huiles suivantes :
- une huile polyorganosiloxane (TEMOIN 1) de formule moyenne 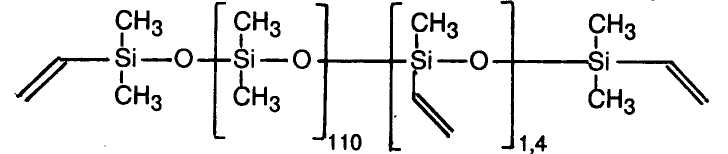 à 1,1% de vinyles en poids.
- une huile polyorganosiloxane à fonctions hexenyles (TEMOIN 2) de formule moyenne 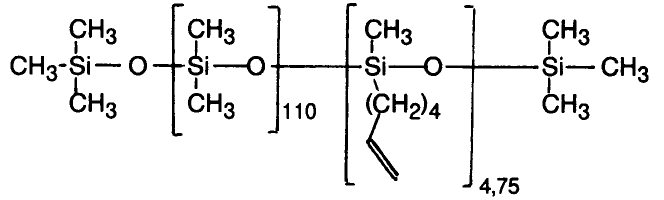 à 1,43% en poids de fonctions hexényles exprimées en vinyles.

L'analyse des résultats figurant dans le tableau I montrent que l'emploi des huiles mixtes permet d'accélerer
. la vitesse de réaction des formulations d'enduction
. la vitesse d'enduction .

Les forces d'adhérences sont du même ordre que celles d'un système classique à fonction vinyle (témoin 1) et meilleure que celles d'un système à fonction hexényle simple (témoin 2).

**TABLEAU**

| huile dévolatilisée | | | | réactivité sur VNC | | vitesse d'enduction m/mn | force d'adhérence cN/cm | qualité de l'enduction |
|---|---|---|---|---|---|---|---|---|
| de l'ex. | fonction alcényle mmol/100g | fonction X mmol/100g | viscosité mPas. | temps de gel mn | fréquence à T0 (Hz) | | | |
| 1 | hexényle 52 | époxy 19 | 480 | 12' | 185 | 160 | 15 | bonne |
| 2 | hexényle 50 | éthyl triéthoxy silyle 19 | 370 | 11'30'' | 175 | 200 | 13 | bonne |
| 3 | hexényle 51 | ethoxy 12 | 460 | 10'30'' | 190 | 200 | 14 | bonne |
| témoin 1 | vinyle 40 | 0 | 200 | 30' | 120 | 140 | 14 | bonne |
| témoin 2 | hexényle 54 | 0 | 480 | 15' | 200 | 150 | 18 | bonne |

## Revendications

**1)** Polyorganosiloxanes mixtes caractérisés en ce qu'ils contiennent
. (a) des motifs semblables ou différents de-formule (I):
Rₐ Y_{b} X_{c} Si O_{(4-a-b-c)/2} (I)
formule dans laquelle :
- les symboles R sont semblables ou différents et représentent un groupe alkyle en C₁-C₁₈, un groupe vinyle, un groupe aryle ou aralkyle en C₆-C₁₂, éventuellement substitué par des atomes d'halogène, au moins 80% molaire desdits radicaux R représentant un groupe méthyle ;
- les symboles X sont semblables ou différents et représentent un atome d'hydrogène ou une fonction polaire réactive exempte des hétéroéléments azote et soufre, fonction polaire réactive liée au silicium par une liaison Si-C ou Si-O-C ;
- les symboles Y sont semblables ou différents et représentent un reste alcényle ou alcényloxy linéaire ou ramifié, au moins en C₄, de préférence en C₄-C₁₂, lié au silicium par une liaison Si-C, reste alcényle ou alcényloxy présentant au moins une insaturation éthylénique en extrémité de chaîne et/ou dans la chaîne ;
- a, b et c sont égaux à 0, 1, 2, ou 3;
- a+b+c=0, 1, 2 ou 3 ;
le taux de motifs SiO_{4/2} étant inférieur à 30% en mole ;
. (b) éventuellement des motifs de formule (II)
Y' [Si Rₐ X_{c} O_{(4-a-c-1)/2}]ₙ (II)
formule dans laquelle
- Y' est un reste polyvalent dérivant de l'hydrosilylation d'au moins une double liaison éthylénique du reste Y ;
- n est égal à la valence du reste Y'
le nombre de motifs de formule (II) par molécule étant inférieur à 1 lorsque X représente un groupe alcoxyfonctionnel en C₁-C₄ avec Y représentant un reste alcényle ;
(c) éventuellement et de préférence moins de 20% molaire de motifs de formule (III)
Rₐ Y''_{b} X_{c} Si O_{(4-a-b-c)/2} (III)
formule dans laquelle Y'' représente un reste monovalent isomère du reste Y ;
le nombre de motifs de formule (I) dans lesquels l'atome de silicium porte une fonction X et/ou un reste Y et de motifs de formule (II) dans lesquels l'atome de silicium porte une fonction X , est tel que lesdits polyorganosiloxane contiennent
- au moins 0,1% molaire, de préférence de 0,5 à 5% molaire, de fonctions X
- et au moins 0,1% molaire, de préférence de 1,5 à 10% molaire, de restes Y.

**2)** Polyorganosiloxanes mixtes selon la revendication 1), caractérisés en ce que la fonction réactive X est une fonction polaire susceptible de réagir soit chimiquement par hydrolyse, estérification, condensation, polycondensation, addition, polyaddition ..., soit par interaction dipolaire.

**3)** Polyorganosiloxanes mixtes selon la revendication 1) ou 2), caractérisés en ce la fonction réactive X est hydrogéno ou un groupe hydroxyfonctionnel, époxyfonctionnel, alkoxyfonctionnel, aryloxy-fonctionnel, acyloxyfonctionnel, alcénylcarbonyloxyfonctionnel, trialcoxysilyl-fonctionnel ... contenant de 1 à 20 atomes de carbone.

**4)** Polyorganosiloxanes mixtes selon l'une quelconque des revendications 1) à 3), caractérisés en ce que le reste Y est un groupe 3-butényle, 5-hexényle, 9-décényle, 10-undécényle, 5,9-décadiényle, 6,11-dodecadiényle, allyloxypropyle...

**5)** Procédé de préparation des polyorganosiloxanes mixtes à fonction X non hydrogéno, faisant l'objet de l'une quelconque des revendications 1) à 4), par réactions d'addition simultanées ou successives ou par réactions de déshydrogénocondensation et d'addition simultanées ou par réactions de déshydrogénocondensation puis d'addition successives, ce à partir des organohydrogénopolysiloxanes (H) correspondants exempts des fonctions X et restes Y, du ou des alcène(s) (Ψ) présentant au moins deux insaturations oléfiniques, dont dérivent le ou les reste(s) alcényle(s) ou alcényloxy Y et du ou des composé(s) organique(s) éthyléniquement insaturé(s) ou hydroxylé(s) (Ξ) dont dérive(nt) la ou les fonction(s) X, le ou les composé(s) organique(s) éthyléniquement insaturé(s) ou hydroxylé(s) (Ξ) réagissant préalablement à (I') ou aux alcène(s) (Ψ) sur les fonctions SiH de l'organohydrogénopolysiloxane (H) mis en oeuvre lorsqu'un taux de motifs de formule (II) par molécule inférieur à 1 est désiré.

**6)** Procédé de préparation des polyorganosiloxanes mixtes à fonction X hydrogéno, selon l'une quelconque des revendications 1) à 4), par réaction d'hydrosilylation partielle à partir du ou des alcène(s) (Ψ) et des organohydrogénopolysiloxanes correspondants (H) exempts desdits restes Y, le rapport molaire SiH [de (H)] / (Ψ) pouvant être de l'ordre de 0,01 à moins de 8, de préférence de l'ordre de 0,1 à 4.

**7)** Utilisation des polyorganosiloxanes mixtes faisant l'objet de l'une quelconque des revendications 1) à 4), pour la réalisation de compositions durcissables anti-adhérentes.

**8)** Compositions durcissables anti-adhérentes comprenant les polyorganosiloxanes mixtes faisant l'objet de l'une quelconque des revendications 1) à 4), compositions caractérisées en ce qu'elles renferment :
- (100-x)parties en poids d' un polydiorganosiloxane "Si alcényle"de base (A) choisi parmi
. les polydiorganosiloxanes linéaires ou cyclique (A1) bloqués par des groupes terminaux triorganosiloxanes , lesdits radicaux organiques étant des groupes alkyle ou cycloalkyle en C₁-C₁₈, alcényle en C₂-C₂₀, de préférence en C₂-C₁₂, alcényl(C₃-C₉)oxyalkylène(C₂-C₄), phényle, au moins 80% molaire desdits radicaux étant un groupe méthyle, au moins 0,1% molaire, de préférence de 0,5 à 5% molaire desdits radicaux organiques étant des groupes alcényle ou alcényloxyalkylène identiques ou différents liés directement au silicium ("_{Si} _{alcényle}") ;
. et/ou les polydiorganosiloxanes mixtes linéaires ou cycliques (A2) contenant les motifs de formules (I), (II) et éventuellement (III) ci-dessus, polydiorganosiloxanes mixtes essentiellement constitués de motifs "D" et "M", ledit polyorganosiloxane (A) étant éventuellement dilué dans un solvant des polymères silicones ;
- un agent de réticulation polyorganohydrogénosiloxane (B) choisi parmi
. les polyorganohydrogénosiloxanes linéaires ou cycliques (B1 ) contenant de 1,6 à 0,9 % molaire d'atomes d'hydrogène liés directement au silicium ("_{SiH}") en bout(s) de chaîne et/ou dans la chaîne, les radicaux organiques identiques ou différents étant des groupes alkyle en C₁-C₁₈, phényle, au moins 80 % molaire desdits radicaux organiques étant des groupes méthyle ;
. et/ou les résines polyorganohydrogénosiloxanes (B2) constituées de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
ledit agent de réticulation (B) étant éventuellement dilué dans un solvant des polymères silicones ;
- éventuellement un agent inhibiteur d'hydrosilylation (C)
- une quantité efficace d'un catalyseur d'hydrosilylation (D)
- x parties en poids d'une résine mixte polyorganosiloxane (F) modulateur d'adhérence contenant des motifs de formules (I), (II) et éventuellement (III), ladite résine mixte étant constituée d'au moins deux types de motifs siloxy différents, à savoir des motifs "M" et des motifs "Q" et/ou "T" et éventuellement des motifs "D", le rapport nombre de motifs "M" / nombre de motifs "Q" et/ou "T" étant de 4/1 à 0,5/1, le rapport nombre de motifs "D" / nombre de motifs "Q" et/ou "T" étant de 100/1 à 0,
la valeur de x allant de 1 à 100, de préférence de 5 à 95 et tout particulièrement de 10 à 50, lorsque ledit polydiorganosiloxane (A) est constitué par le polydiorganosiloxane (A1), ou de 0 à100, de préférence de 0 à 95 et tout pariculièrement de 0 à 50 lorsque ledit polydiorganosiloxane (A) est constitué par le polymère mixte (A2),
ladite résine modulateur (F) étant éventuellement diluée ou solubilisée dans un solvant des polymères silicones ;
la quantité d'agent de réticulation (B) étant telle que dans lesdites compositions durcissables le rapport nombre de moles de "SiH" provenant notamment dudit agent de réticulation (B) et, éventuellement des solvants de polymères silicones/nombre de moles de "_{Si alcényle}" provenant notamment du polyorganosiloxane (A), éventuellement des solvants de polymères silicones et de la résine modulateur (F) lorsqu'elle est présente, soit supérieur à 1, de préférence de l'ordre de 1,1 à 1,6.

**9)** Support souple antiadhérent obtenu par application sur ledit support de la composition faisant l'objet de la revendication 8) puis durcissement à la chaleur de ladite composition.
